# EUROPÄISCHE PATENTSCHRIFT

(11) **EP 2 753 846 B1**
(45) Veröffentlichungstag und Bekanntmachung des Hinweises auf die Patenterteilung: **27.05.2020**
(21) Anmeldenummer: 12756073.8
(22) Anmeldetag: 06.08.2012
(51) Int. Cl.: F16F 15/14, F16H 57/00

(54) **ANTRIEBSSTRANG MIT STIRNRADGETRIEBE UND FLIEHKRAFTPENDEL**
DRIVE TRAIN HAVING A SPUR GEARING AND A CENTRIFUGAL PENDULUM
CHAÎNE CINÉMATIQUE À ENGRENAGE CYLINDRIQUE ET PENDULE CENTRIFUGE

(30) Priorität: 09.09.2011 DE 102011082388
(43) Veröffentlichungstag der Anmeldung: 16.07.2014
(73) Patentinhaber: Schaeffler Technologies AG & Co. KG, 91074 Herzogenaurach (DE)
(72) Erfinder: RUSCH, Alain, F-67170 Brumath (FR); LEHMANN, Steffen, 76275 Ettlingen (DE); GERHARDT, Friiedrich, 77694 Kehl-Leutesheim (DE)
(86) Internationale Anmeldenummer: PCT/DE2012/000791
(87) Internationale Veröffentlichungsnummer: WO 2013/034120

(56) Entgegenhaltungen:
- EP-A2- 1 780 434
- EP-A2- 2 108 859
- WO-A1-2010/028620
- DE-A1-102009 023 337
- US-A1- 2007 179 012

## Beschreibung

Die vorliegende Erfindung betrifft einen Antriebsstrang gemäß dem Oberbegriff des Patentanspruchs 1. Insbesondere betrifft die Erfindung einen Antriebsstrang mit einer Brennkraftmaschine mit einer Kurbelwelle und einem Stirnradgetriebe mit zumindest einer mittels einer Reibungskupplung mit der Kurbelwelle koppelbaren Getriebeeingangswelle, wobei eine in ein Gehäuse der Reibungskupplung integrierte Kupplungsscheibe mit der zumindest einen Getriebeeingangswelle drehschlüssig verbunden ist, sowie einem Fliehkraftpendel.

Zur Reduzierung von Torsionsschwingungen wie Drehungleichförmigkeiten beispielsweise einer Kurbelwelle einer Brennkraftmaschine werden sogenannte Fliehkraftpendel auf einem rotierenden Teil des Antriebsstrangs angeordnet und mit in Umfangsrichtung verschwenkbar aufgenommenen Massen versehen. Diese Massen führen im Feld der Zentrifugalbeschleunigung Schwingungen auf vorgegebenen Bahnen aus, wenn sie durch Drehzahlungleichförmigkeiten angeregt werden. Durch diese Schwingungen wird der Erregerschwingung zu passenden Zeiten Energie entzogen und wieder zugeführt, so dass es zu einer Beruhigung der Erregerschwingung kommt, das Fliehkraftpendel also als Tilger wirkt. Da sowohl die Eigenfrequenz der Fliehkraftpendelschwingung als auch die Erregerfrequenz proportional zur Drehzahl sind, kann die Tilgerwirkung eines Fliehkraftpendels über den ganzen Frequenzbereich erzielt werden.

Ein Antriebsstrang mit einer Brennkraftmaschine mit einer Kurbelwelle und einem Stirnradgetriebe mit einer Getriebeeingangswelle und einer Kurbelwelle und Getriebeeingangswelle koppelnden Reibungskupplung sowie einem Drehschwingungen des Antriebsstrangs tilgenden Fliehkraftpendel ist aus der DE 10 2009 042 831 A1 bekannt. Hierbei ist das Fliehkraftpendel an der Reibungskupplung aufgenommen. Das Drehmoment wird dabei über das Gehäuse der Reibungskupplung von der Kurbelwelle über eine mit der Getriebeeingangswelle verbundene Kupplungsscheibe in das Stirnradgetriebe eingeleitet. Weiterhin kann das Fliehkraftpendel wie aus der DE 10 2010 018 941 A1 hervorgeht in einen Drehschwingungsdämpfer wie Zweimassenschwungrad integriert sein. Weiterhin ist bekannt, Fliehkraftpendel in die Kupplungsscheibe selbst zu integrieren.

Der Bauraum des Antriebsstrangs ist insbesondere im Bereich von Drehschwingungsdämpfern, Reibungskupplungen, Kupplungsscheiben und dergleichen zumeist begrenzt. Die Übertragung eines maximalen Drehmoments ist dabei vorrangig, so dass meist wenig Bauraum für ein mit ausreichender Schwingungsisolation arbeitendes Fliehkraftpendel zur Verfügung steht.

Aus der EP 1 780 434 A2 ist ein Antriebsstrang bekannt, der auf den Oberbegriff des Patentanspruchs 1 lesbar ist.

Aufgabe der Erfindung ist, einen Antriebsstrang vorzuschlagen, dessen Fliehkraftpendel unabhängig von in den einzelnen Komponenten Reibungskupplung und Drehschwingungsdämpfer in den Antriebsstrang integrierbar ist.

Erfindungsgemäß gelöst wird diese Aufgabe durch einen Antriebsstrang gemäß Patentanspruch 1. Bevorzugte Ausführungsbeispiele sind in den abhängigen Patentansprüchen dargelegt. Der Antriebsstrang ist ausgestattet mit einer Brennkraftmaschine mit einer Kurbelwelle und einem Stirnradgetriebe mit zumindest einer mittels einer Reibungskupplung mit der Kurbelwelle koppelbaren Getriebeeingangswelle, wobei eine in ein Gehäuse der Reibungskupplung integrierte Kupplungsscheibe mit der zumindest einen Getriebeeingangswelle drehschlüssig verbunden ist, sowie einem Fliehkraftpendel, wobei das Fliehkraftpendel auf der zumindest einen Getriebeeingangswelle axial beabstandet zu der Kupplungsscheibe angeordnet und auf dieser direkt angeordnet ist. Zur besseren und unabhängigen Nutzung von Bauraum ist das Fliehkraftpendel mit seinem Pendelflansch beispielsweise direkt auf der Getriebeeingangswelle drehschlüssig mittels einer Verzahnung oder mittels einer Nabe aufgenommen. Je nach zur Verfügung stehendem Bauraum wird das Fliehkraftpendel hierbei unabhängig von übrigen Komponenten des Antriebsstrangs mit der Getriebeeingangswelle verbunden.

Es hat sich dabei als vorteilhaft erwiesen, wenn das Fliehkraftpendel außerhalb von Gehäusen weiterer Aggregate wie Zweimassenschwungrad, Reibungskupplung und dergleichen angeordnet ist. Erfindungsgemäß ist das Fliehkraftpendel zwischen Brennkraftmaschine und Reibungskupplung angeordnet. In nicht erfindungsgemäßen Ausführungsformen kann das Fliehkraftpendel an einem der Kupplungsscheibe gegenüberliegenden Ende der das Stirnradgetriebe durchgreifenden Getriebeeingangswelle angeordnet sein. Die Zuordnung des Fliehkraftpendels zur Getriebeeingangswelle bleibt dabei bei geöffneter oder schlupfender Reibungskupplung vollständig erhalten, so dass bei geöffneter Reibungskupplung gegebenenfalls in Zusammenarbeit mit einem Drehschwingungsdämpfer in der Kupplungsscheibe, beispielsweise eines Leerlaufdämpfers, im Stirnradgetriebe auftretende Drehschwingungen gedämpft werden können und so ein Getrieberasseln unterbunden beziehungsweise zumindest abgeschwächt wird.

In einem weiteren nicht erfindungsgemäßen Ausführungsbeispiel eines Antriebsstrangs kann das Stirnradgetriebe als Doppelkupplungsgetriebe mit zwei Teilgetrieben mit jeweils einer Getriebeeingangswelle ausgebildet sein, wobei zumindest ein Fliehkraftpendel auf einer als Hohlwelle ausgebildeten Getriebeeingangswelle aufgenommen ist. Weiterhin kann von den anderen Aggregaten wie Reibungskupplung und/oder Zweimassenschwungrad ein Fliehkraftpendel wie vorgeschlagen auf der in der Hohlwelle geführten Getriebeeingangswelle vorgesehen sein.

Gemäß einer nicht erfindungsgemäßen Ausführungsform kann das auf der als Hohlwelle ausgebildeten Getriebeeingangswelle angeordnete Fliehkraftpendel zwischen Stirnradpaaren der beiden Teilgetriebe bauraumsparend angeordnet sein, so dass durch die Integration zumindest eines der Fliehkraftpendel in ein Doppelkupplungsgetriebe ein Bauraumvorteil erzielt wird. Beispielsweise können Pendelmassen des Fliehkraftpendels radial außerhalb zumindest eines auf einem der Getriebeeingangswellen aufgenommenen Stirnrads angeordnet sein und dieses zumindest teilweise axial übergreifen.

Die Erfindung wird anhand der in den Figuren 1 bis 5 dargestellten Ausführungsbeispiele näher erläutert. Dabei zeigen:
- Figur 1: einen schematisch dargestellten Antriebsstrang mit zwischen Brennkraftmaschine und Reibungskupplung direkt auf der Getriebeeingangswelle angeordnetem Fliehkraftpendel,
- Figur 2: einen schematisch dargestellten, nicht erfindungsgemäßen Antriebsstrang mit zwischen Reibungskupplung und Stirnradgetriebe direkt auf der Getriebeeingangswelle angeordnetem Fliehkraftpendel,
- Figur 3: einen schematisch dargestellten, nicht erfindungsgemäßen Antriebsstrang mit in das Stirnradgetriebe integriertem, direkt auf der Getriebeeingangswelle angeordnetem Fliehkraftpendel,
- Figur 4: einen schematisch dargestellten, nicht erfindungsgemäßen Antriebsstrang mit auf der der Reibungskupplung abgewandten Ende der Getriebeeingangswelle direkt angeordneten Fliehkraftpendel
- und Figur 5: einen schematisch dargestellten, nicht erfindungsgemäßen Antriebsstrang mit einem Doppelkupplungsgetriebe mit zwei Teilgetrieben mit jeweils einer Getriebeeingangswelle und jeweils einem auf einer Getriebeeingangswelle angeordneten Fliehkraftpendel.

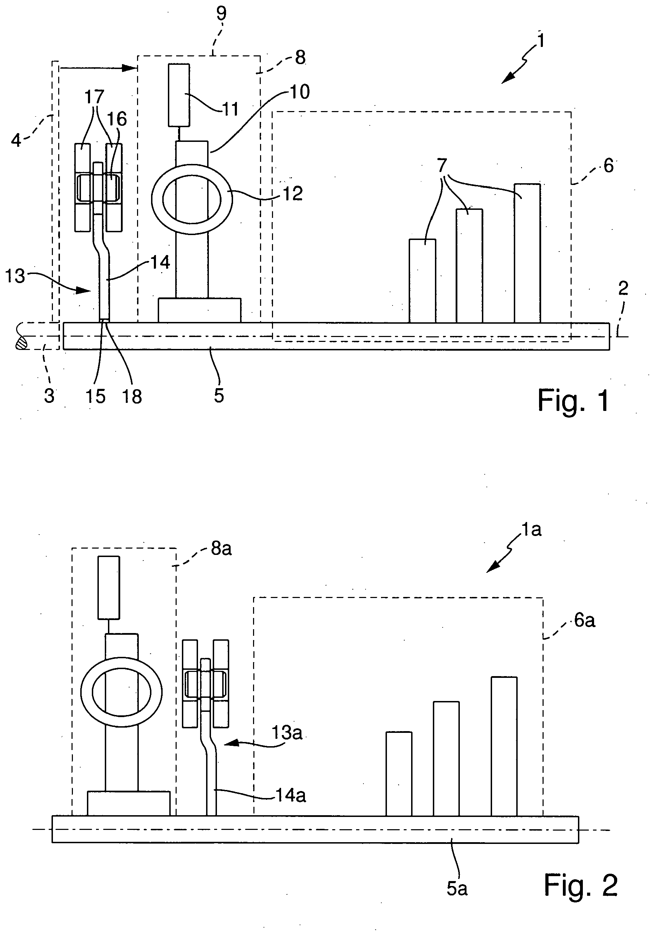

Figur 1 zeigt schematisch die obere Hälfte des um die Drehachse 2 angeordneten Antriebsstrangs 1 mit einer Brennkraftmaschine, von der lediglich die Kurbelwelle 3 und das Schwungrad 4, welches ein Ein- oder Zweimassenschwungrad sein kann, dargestellt ist. Auf der Getriebeeingangswelle 5 des Stirnradgetriebes 6 mit den Stirnrädern 7 zur Einstellung unterschiedlicher Übersetzungen mit komplementären, mit diesen kämmenden und auf einer nicht dargestellten Getriebeausgangswelle angeordneten, ebenfalls nicht dargestellten Stirnrädern ist die Reibungskupplung 8 mit dem Gehäuse 9 und der Kupplungsscheibe 10 angeordnet. Das Gehäuse 9 nimmt das Drehmoment der Kurbelwelle 3 über das Schwungrad 4 auf und überträgt dieses abhängig vom Schaltzustand der Reibungskupplung 8 über die Reibbeläge 11 der Kupplungsscheibe 10 auf die Getriebeeingangswelle 5, mit der die den Drehschwingungsdämpfer 12 aufweisende Kupplungsscheibe 10 drehschlüssig verbunden ist.

In dem in Figur 1 gezeigten Ausführungsbeispiel ist das Fliehkraftpendel 13 in dem Bauraum zwischen Schwungrad 4 und Reibungskupplung 8 untergebracht und direkt mit der Getriebeeingangswelle 5 drehschlüssig verbunden wie verzahnt. Der Pendelflansch 14 des Fliehkraftpendels 13 nimmt mittels der Rollen 16 beidseitig die Pendelmassen 17 auf und ist mittels der Innenverzahnung 15 auf der komplementären Außenverzahnung 18 der Getriebeeingangswelle 5 drehschlüssig verzahnt. Alternativ kann der Pendelflansch 14 auf einer Nabe aufgenommen sein, die ihrerseits mit der Getriebeeingangswelle 5 drehschlüssig verbunden wie verzahnt ist und auf der der Pendelflansch 14 drehschlüssig oder unter Zwischenschaltung einer Rutschkupplung momentenbegrenzt aufgenommen ist.

Im Unterschied zu dem Antriebsstrang 1 der Figur 1 ist in Figur 2 der nicht erfindungsgemäße Antriebsstrang 1a mit einer von dem Stirnradgetriebe 6a beabstandeten Reibungskupplung 8a gezeigt. Hierbei ist das Fliehkraftpendel 13a mit dessen Pendelflansch 14a direkt auf der Getriebeeingangswelle 5a in dem Bauraum zwischen Reibungskupplung 8a und Stirnradgetriebe 6a aufgenommen.

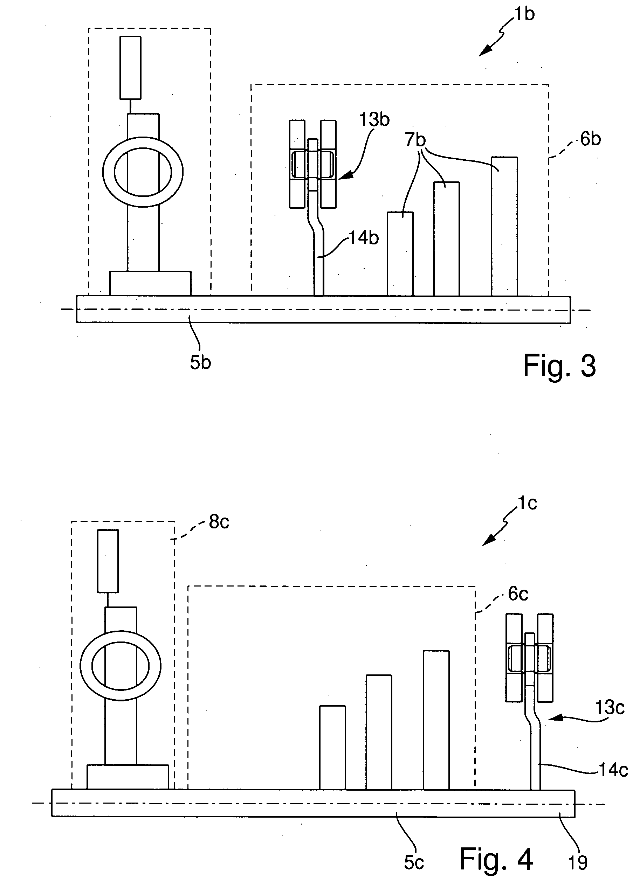

Die Figur 3 zeigt in Abänderung der Antriebsstränge 1, 1a der Figuren 1 und 2 den nicht erfindungsgemäßen Antriebsstrang 1b mit einem direkt auf der Getriebeeingangswelle 5b aufgenommenen Pendelflansch 14b des Fliehkraftpendels 13b. Das Fliehkraftpendel 13b ist dabei in das Stirnradgetriebe 6b aufgenommen und - wie gezeigt - axial neben den Stirnrädern 7b auf der Getriebeeingangswelle 5b angeordnet. Alternativ kann das Fliehkraftpendel 13b zwischen den Stirnrädern 7b angeordnet sein.

In weiterer Abänderung ist der nicht erfindungsgemäße Antriebsstrang 1c der Figur 4 im Unterschied zu den Antriebssträngen 1, 1a, 1b der Figuren 1 bis 3 mit dem an der der Reibungskupplung 8c abgewandten Seite des Stirnradgetriebes 6c direkt auf der Getriebeeingangswelle 5c angeordneten Fliehkraftpendel 13c ausgestattet. Hierzu ist die Getriebeeingangswelle 5c verlängert und durchgreift das Stirnradgetriebe 6c und nimmt den Pendelflansch 14c des Fliehkraftpendels 13c an dem verlängerten Ende 19 drehschlüssig auf.

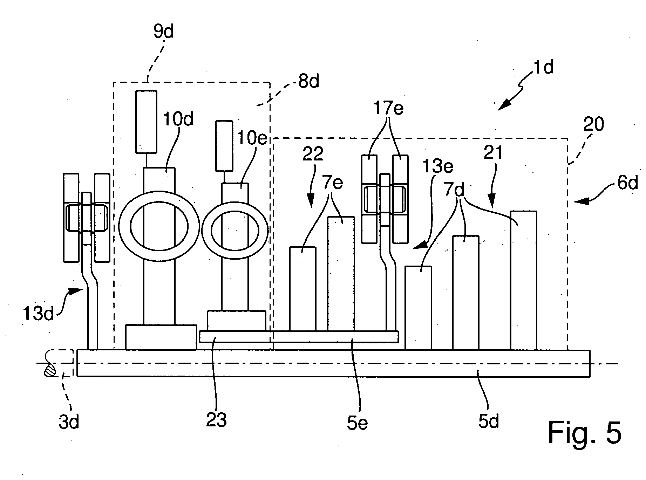

Figur 5 zeigt in schematischer Darstellung die obere Hälfte des um die die Drehachse 2 angeordneten, nicht erfindungsgemäßen Antriebsstrangs 1d, der im Unterschied zu den Antriebssträngen 1, 1a, 1b, 1c der Figuren 1 bis 4 das Stirnradgetriebe 6d in Form eines Doppelkupplungsgetriebes 20 mit den beiden Teilgetrieben 21, 22 mit jeweils auf separaten Getriebeeingangswellen 5d, 5e angeordneten Radsätzen mit den Stirnrädern 7d, 7e enthält. Dementsprechend ist die Doppelkupplung 8d mit den Kupplungsscheiben 10d, 10e vorgesehen, die unabhängig voneinander das von einer nicht dargestellten Kurbelwelle auf das Gehäuse 9d der Doppelkupplung 8d übertragene Drehmoment auf die Getriebeeingangswellen 5d, 5e übertragen.

Die Getriebeeingangswellen 5d, 5e sind koaxial zueinander angeordnet. Hierzu ist die Getriebeeingangswelle 5e als Hohlwelle 23 ausgebildet und um die Getriebeeingangswelle 5d angeordnet. Beiden Getriebeeingangswellen 5d, 5e ist jeweils ein direkt mit diesen drehschlüssig verbundenes Fliehkraftpendel 13d, 13e zugeordnet. In dem gezeigten Ausführungsbeispiel ist das auf der Hohlwelle 23 aufgenommene Fliehkraftpendel 13e im Doppelkupplungsgetriebe 20 aufgenommen. Das gezeigte Ausführungsbeispiel zeigt das zwischen den beiden Radsätzen der Teilgetriebe 21, 22 angeordnete Fliehkraftpendel 13e, dessen Pendelmassen 17e das nächstliegende, mit geringstem Durchmesser versehene Stirnrad der Stirnräder 7d radial übergreifen. Je nach Ausbildung der nicht dargestellten komplementären Stirnräder der Getriebeausgangswelle kann beispielsweise bei Ausbildung des Rückwärtsgangs an dieser Stelle aus Bauraumgründen die nächstliegende der Pendelmassen 17e das Nächstliegende der Stirnräder 7d zumindest teilweise axial übergreifen.

Das der Getriebeeingangswelle 5d zugeordnete Fliehkraftpendel 13d ist in dem gezeigten Ausführungsbeispiel endseitig an der Getriebeeingangswelle 5d zwischen der Doppelkupplung 8d und der Kurbelwelle 3d mit einer gegebenenfalls auf dieser angeordneten Schwungmasse wie Ein- oder Zweimassenschwungrad angeordnet.

### Bezugszeichenliste

- 1: Antriebsstrang
- 1a: Antriebsstrang
- 1b: Antriebsstrang
- 1c: Antriebsstrang
- 1d: Antriebsstrang
- 2: Drehachse
- 3: Kurbelwelle
- 3d: Kurbelwelle
- 4: Schwungrad
- 5: Getriebeeingangswelle
- 5a: Getriebeeingangswelle
- 5b: Getriebeeingangswelle
- 5c: Getriebeeingangswelle
- 5d: Getriebeeingangswelle
- 5e: Getriebeeingangswelle
- 6: Stirnradgetriebe
- 6a: Stirnradgetriebe
- 6b: Stirnradgetriebe
- 6c: Stirnradgetriebe
- 6d: Stirnradgetriebe
- 7: Stirnrad
- 7b: Stirnrad
- 7d: Stirnrad
- 7e: Stirnrad
- 8: Reibungskupplung
- 8a: Reibungskupplung
- 8c: Reibungskupplung
- 8d: Doppelkupplung
- 9: Gehäuse
- 9d: Gehäuse
- 10: Kupplungsscheibe
- 10d: Kupplungsscheibe
- 10e: Kupplungsscheibe
- 11: Reibbelag
- 12: Drehschwingungsdämpfer
- 13: Fliehkraftpendel
- 13a: Fliehkraftpendel
- 13b: Fliehkraftpendel
- 13c: Fliehkraftpendel
- 13d: Fliehkraftpendel
- 13e: Fliehkraftpendel
- 14: Pendelflansch
- 14a: Pendelflansch
- 14b: Pendelflansch
- 14c: Pendelflansch
- 15: Innenverzahnung
- 16: Rolle
- 17: Pendelmasse
- 17e: Pendelmasse
- 18: Außenverzahnung
- 19: Ende
- 20: Doppelkupplungsgetriebe
- 21: Teilgetriebe
- 22: Teilgetriebe
- 23: Hohlwelle

## Patentansprüche

1. Antriebsstrang (1) mit einer Brennkraftmaschine mit einer Kurbelwelle (3) und einem Stirnradgetriebe (6) mit zumindest einer mittels einer Reibungskupplung (8) mit der Kurbelwelle (3) koppelbaren Getriebeeingangswelle (5), wobei eine in ein Gehäuse (9) der Reibungskupplung (8) integrierte Kupplungsscheibe (10) mit der zumindest einen Getriebeeingangswelle (5) drehschlüssig verbunden ist, sowie einem Fliehkraftpendel (13), das auf der zumindest einen Getriebeeingangswelle (5) axial beabstandet zu der Kupplungsscheibe (10) angeordnet und direkt aufgenommen ist, wobei die Brennkraftmaschine ein Schwungrad (4) aufweist, und das Fliehkraftpendel (13) in dem Bauraum zwischen dem Schwungrad (4) und der Reibungskupplung (8) untergebracht ist, **dadurch gekennzeichnet, dass** das Fliehkraftpendel (13) außerhalb des Gehäuses (9) der Reibungskupplung (8) angeordnet ist.

2. Antriebsstrang (1) nach Anspruch 1, **dadurch gekennzeichnet, dass** das Fliehkraftpendel (13) einen Pendelflansch (14) aufweist, der mittels Rollen (16) beidseitig des Pendelflansches (14) Pendelmassen (17) aufnimmt.

3. Antriebsstrang (1) nach Anspruch 1 oder 2, **dadurch gekennzeichnet, dass** das Fliehkraftpendel mit der Getriebeeingangswelle (5) drehschlüssig verbunden ist.

4. Antriebsstrang (1) nach Anspruch 2, **dadurch gekennzeichnet, dass** der Pendelflansch (14) auf einer Nabe aufgenommen ist, die mit der Getriebeeingangswelle (5) drehschlüssig verbunden ist, wobei der Pendelflansch (14) auf der Nabe drehschlüssig oder unter Zwischenschaltung einer Rutschkupplung momentenbegrenzt aufgenommen ist.

## Claims

1. A drive train (1) comprising an internal combustion engine with a crankshaft (3) and a spur gearing (6) having at least one transmission input shaft (5) which can be coupled to the crankshaft (3) by means of a friction clutch (8), wherein a clutch disc (10) integrated into a housing (9) of the friction clutch (8) is connected in a rotationally locking manner with the at least one transmission input shaft (5), and a centrifugal pendulum (13) which is arranged and directly received on the at least one transmission input shaft (5) at an axial distance from the clutch disc (10), wherein the internal combustion engine has a flywheel (4), and the centrifugal pendulum (13) is housed in the space between the flywheel (4) and the friction clutch (8), **characterised in that** the centrifugal pendulum (13) is arranged outside the housing (9) of the friction clutch (8).

2. The drive train (1) according to claim 1, **characterised in that** the centrifugal pendulum (13) has a pendulum flange (14) which receives pendulum masses (17) on both sides of the pendulum flange (14) by means of rollers (16).

3. The drive train (1) according to claim 1 or 2, **characterised in that** the centrifugal pendulum is connected in a rotationally locking manner to the transmission input shaft (5).

4. The drive train (1) according to claim 2, **characterised in that** the pendulum flange (14) is received on a hub which is connected in a rotationally locking manner to the transmission input shaft (5), wherein the pendulum flange (14) is received in a rotationally locking manner on the hub or is received in a torque-limiting manner by interposition of a slip clutch.

## Revendications

1. Chaîne cinématique (1) comprenant un moteur à combustion interne doté d'un vilebrequin (3) et un engrenage cylindrique (6) doté d'au moins un arbre d'entrée de transmission (5) pouvant être accouplé au vilebrequin (3) au moyen d'un embrayage à friction (8), un disque d'embrayage (10) intégré dans un carter (9) de l'embrayage à friction (8) étant relié solidaire en rotation à l'au moins un arbre d'entrée de transmission (5) et un pendule centrifuge (13) qui est disposé et reçu directement sur l'au moins un arbre d'entrée de transmission (5) à une distance axiale du disque d'embrayage (10), le moteur à combustion interne présentant un volant (4) et le pendule centrifuge (13) étant logé dans l'espace entre le volant (4) et l'embrayage à friction (8), **caractérisée en ce que** le pendule centrifuge (13) est disposé à l'extérieur du carter (9) de l'embrayage à friction (8).

2. Chaîne cinématique (1) selon la revendication 1, **caractérisée en ce que** le pendule centrifuge (13) présente une bride pendulaire (14) qui reçoit des masses pendulaires (17) des deux côtés de la bride pendulaire (14) au moyen de rouleaux (16).

3. Chaîne cinématique (1) selon la revendication 1 ou 2, **caractérisée en ce que** le pendule centrifuge est relié solidaire en rotation à l'arbre d'entrée de transmission (5).

4. Chaîne cinématique (1) selon la revendication 2, **caractérisée en ce que** la bride pendulaire (14) est reçue sur un moyeu qui est relié solidaire en rotation à l'arbre d'entrée de transmission (5), la bride pendulaire (14) étant reçue sur le moyeu solidaire en rotation ou avec interposition d'une limitation de couple d'embrayage à friction.
